# EUROPEAN PATENT APPLICATION

(11) **EP 4 497 328 A1**
(43) Date of publication of application: **29.01.2025**
(21) Application number: 23187890.1
(22) Date of filing: 26.07.2023
(51) Int. Cl.: A01N 37/44, A01N 65/03, A01P 21/00, C05F 11/10

(54) **A BIOSTIMULANT COMBINATION AND METHODS OF USE**

(71) Applicant: Acadian Seaplants Limited, Dartmouth NS B3B 1X8 (CA)
(72) Inventor: LITTLE, Holly, Cornwallis Park, Nova Scotia, B0S 1H0 (CA); FOWLER, Rachel, Cornwallis Park, Nova Scotia, B0S 1H0 (CA); TODD, Josie, Cornwallis Park, Nova Scotia, B0S 1H0 (CA); VAN DER ZWAN, Timo, Vancouver, BC, V5S 0B7 (CA)
(74) Representative: Vossius & Partner Patentanwälte Rechtsanwälte mbB

(57) **Abstract**

The present invention relates to a method of preventing or mitigating the effects of abiotic stress in a plant which involves administering to the plant, including a seed of the plant, or to the growth medium of the plant an effective amount of phenylalanine and/or any salts or solvates thereof and a seaweed extract.

## Description

### Field of the invention

The present disclosure generally relates to biostimulant combination which is useful for preventing or mitigating the effects of abiotic stress and crop productivity management in a plant and/or plant seed.

### Background of the invention

Abiotic stress is a major force in global agriculture that reduces yield relative to the genetic potential of the crop. As the global population grows, the gains realized that are based on the exploitation of finite resources are in jeopardy. Sustainability in agriculture is critical as humanity moves forward and the amount of arable land per capita shrinks (FAO 2023). Biostimulants are an important component of agricultural sustainability. Optimizing biostimulants through the development of next generation combinations of increasing complexity can deliver superior crop health results.

Phenylalanine is an essential amino acid that is a precursor in the synthesis of various phenolic compounds, such as flavonoids and lignin, which are produced by the enzyme phenylalanine ammonia-lyase (PAL) (Teixeira et al. 2017 DOI: 10.3389/fpls.2017.00327; Hyun et al. 2018 DOI: 10.5941/MYCO.2011.39.4.257). These phenylalanine derived compounds allow for greater metabolic and enzymatic activity, which benefits stress response, growth, signalling, and ultraviolet protection in plants (Almas et al. 2021 DOI: 10.1007/s42729-021-00588-9). Teixeira et al. (2017) observed an 165 % increase PAL enzyme activity in phenylalanine treated soybean plants compared to the control. (Marium et al. 2021 DOI: 10.21162/PAKJAS/21.10014) tested the foliar application of methionine and phenylalanine on salinity stressed cucumber and found that the amino acids together improved shoot weights and essential ion uptake (K⁺, Ca²⁺, Mg²⁺) at a concentration of 25 ppm methionine and 100 ppm phenylalanine. Foliar application of phenylalanine alone significantly increased the count and weight of tomato fruit under no stress and 4 dS/m salt stress (Almas et al. 2021 DOI: 10.1007/s42729-021-00588-9). These studies observed greatest improvements of plant growth parameters from foliar application of phenylalanine at 100-150 ppm.

Liquid biostimulants containing extract of *Ascophyllum nodosum* have been available on the global market since the mid-twentieth century (Craigie 2011 DOI: 10.1007/s10811-010-9560-4). These products have been shown to benefit crop production via enhanced root and shoot growth, yield, and resilience to stress (Pereira et al. 2020 DOI: 10.1002/pan3.10146).

There is an increasing need for biostimulant combinations that are effective at mitigating the impact of abiotic stress on plants, while being sustainable, cost-effective, and simple to use via current agricultural practices.

### Summary of the invention

It has now been found, in accordance with the present invention, that a novel combination of an *Ascophyllum nodosum* seaweed extract and phenylalanine and/or any salts or solvates thereof in a synergistic effective amount, has a biostimulant activity in mitigating the effects of abiotic stress in plants and/or seeds.

This finding is highly important, since it enabled the formation of an effective, synergistic, and compatible seaweed-based combination.

Furthermore, it has been found, in accordance with the present invention, that the combination of a seaweed extract, more specifically an *Ascophyllum nodosum* extract, and a phenylalanine and/or any salts or solvates thereof is synergistic.

Specifically, and in fact as shown in the experimental section herein, a combination for mitigating an abiotic stress in a plant or a seed of a plant comprising a seaweed extract, more specifically an *Ascophyllum nodosum* extract, with phenylalanine and/or any salts or solvates thereof, in a drench application.

The present invention thus provides a combination of seaweed extract and phenylalanine and/or any salts or solvates thereof.

In another aspect, the present invention provides a method of crop productivity management in a plant comprising applying to the plant, a seed of the plant or to a growth medium of the plant an effective amount of a combination as defined above.

In yet another aspect, the present invention provides a method of preventing or mitigating the effects of abiotic stress in a plant comprising applying to the plant, a seed of the plant or to a growth medium of the plant an effective amount of a combination as defined above.

In another aspect, the present invention provides a use of a combination as defined above to prevent or mitigate the effects of abiotic stress.

In still another aspect, the present invention provides a use of a combination as defined above to manage crop productivity in a plant.

Other objects and features will be in part apparent and in part pointed out hereinafter.

### Description of the Figures

- **Fig. 1**: shows NPQt (non-photochemical quenching) assessment of the APH 1001 0.5 g/L with L-phenylalanine 0.25 g/L combination - reduced irrigation on soybean.
- **Fig. 2**: shows NPQt (non-photochemical quenching) assessment of the APH 1001 0.5 g/L with L-phenylalanine 0.25 g/L combination - salinity inducement on tomato.
- **Fig. 3**: shows leaf thickness assessment of the APH 1001 0.5 g/L with L-phenylalanine 12.5 mL/L combination - salinity inducement on corn.
- **Fig. 4**: shows leaf temperature differential assessment of the APH 1001 0.5 g/L with L-phenylalanine 0.25 g/L combination - salinity inducement on corn.

### Detailed description of the invention

Several agricultural combinations will be provided in the present disclosure in order to convey the importance of the novel and inventive combination which allows good efficacy as a biostimulant which has good compatibility. Also, to show this invention is not obvious, several comparative examples will be presented.

Surprisingly, it was found that said combination is effective in a synergistic effective amount.

By combining phenylalanine and/or any salts or solvates thereof with *Ascophyllum nodosum* extract, the abiotic stress mitigation properties of both compounds can be harnessed and synergy between the action of the ingredients can be maximized per unit of input. The diversification of active ingredients in a formulation also provides insurance against conditions where the action of one of the ingredients might be reduced.

The methods and uses provided herein generally comprise applying the combination to a plant or a seed.

The combinations and mixture provided herein can be applied as a seed treatment or as a soil treatment applied to the area surrounding a plant, plant part, or seed.

The combinations, methods and mixture provided herein can be applied as a drench application, which is simply the application of the provided composition and/or combination mixed in water on the soil near the plant's root crown. Furthermore, combinations, methods and mixture provided herein can be applied for a prime, cure and/or protect applications. Preferably, but not limited, to prepare the ground for sowing of plant, plant part, or seed, and/or to provide biostimulation for a plant, plant part, or seed which was stressed (under different conditions, such as but not limited to, abiotic stress) and/or protect the plant, plant part, or seed from said stress conditions, respectively.

The agricultural combinations, methods and mixture described herein can be used in connection with any species of plant and/or the seeds thereof. The compositions and methods are typically used in connection with seeds that are agronomically important. The seed can be a transgenic seed from which a transgenic plant can grow that incorporates a transgenic event that confers, for example, tolerance to a particular herbicide or combination of herbicides, increased disease resistance, enhanced tolerance to insects, drought, stress and/or enhanced yield. The seed can comprise a breeding trait, including for example, a disease tolerant breeding trait. In some instances, the seed includes at least one transgenic trait and at least one breeding trait.

The combinations, methods and mixture can be used for the treatment of any suitable seed type, including, but not limited to row crops and vegetables.

The combinations, methods and mixture disclosed herein can also be applied to turf grass, ornamental grass, and shrubs. The agricultural compositions are also suitable for use in the nursery, lawn and garden, floriculture and provide benefits for enhanced plant productivity, protection health, vigor and longevity.

The combination can be provided in concentrate form. Alternatively, the composition can be provided in ready-to-use form. By "ready-to-use", it is meant that the composition is provided in a form that requires no additional dilution by the user and is ready for application.

For convenience, before further description of the present disclosure, certain terms employed in the specification, and examples are described here. These definitions should be read in the light of the remainder of the disclosure and understood as by a person of skill in the art. The terms used herein have the meanings recognized and known to those of skill in the art. However, for convenience and completeness, particular terms and their meanings are set forth below.

The terms "preferably" and "preferred" as used herein refer to features which are not essential for the present invention and may or may not be fulfilled but may lead to further improvements.

As used herein the term "plant" or "crop" includes reference to whole plants, plant organs (e.g. leaves, stems, twigs, roots, trunks, limbs, shoots, fruits etc.), plant cells, or plant seeds. This term also encompasses plant crops such as fruits.

While in its broadest embodiments, the methods, compounds and compositions described herein may be used in the cultivation of any plant, in preferred embodiments, they may be used in the cultivation of commercially important plants, which can include, without being limited to, cereals (including maize, wheat, alfalfa, barley, rye, oat), vegetables (including pepper, tomato, lettuce, carrots, potatoes), fruits (including apricots, bananas, grapes, bean pods, corn grains, tomatoes, cucumbers, acorns and almonds), row crops (including sunflower, potato, canola, dry bean, field pea, flax, safflower, buckwheat, cotton, maize, soybeans, rapeseed oil and sugar beets).

As used herein, the term "propagation material" of the plant or crop may include all the generative parts of the plant or crop such as seeds and vegetative plant material such as cuttings and tubers, which can be used for the multiplication of the plant. This includes seeds, tubers, spores, corms, bulbs, rhizomes, sprouts basal shoots, stolons, and buds and other parts of plants, including seedlings and young plants, which are to be transplanted after germination or after emergence from soil.

As used herein the term "seaweed" preferably refers to the cold-water seaweed or brown alga (*Phaeophyceae*) of the family *Fucaceae,* belonging to the genus *Ascophyllum.* It is to be understood that the term "seaweed" refers not only to unprocessed seaweed but also to processed seaweed, such as seaweed extract. Preferably, the term "seaweed" refers to a seaweed extract.

As used herein the term "seaweed extract" preferably refers to an extract isolated from seaweed, which usually contains a wide range of active agents, and is typically in a form of a soluble liquid, a liquid concentrate, or a water-soluble powder. More preferably, seaweed processing/extraction can be made using solvents, acids, bases, enzymes or mechanical means eventually in any combination. Preferably, the processing/extraction is made by contacting the seaweed with an aqueous solution comprising an alkaline extraction agent. For the purpose of the present invention, the alkaline extraction agent is preferably a base which is preferably an inorganic base selected from: NaOH, KOH, Na₂CO₃, K₂CO₃, or any combination thereof. The concentration of the alkaline extraction agent preferably ranges from 1 % to 10 % w/w, more specifically 2 % to 5 % w/w, relative to the total weight of the aqueous solution. Preferably, the temperature of the extraction step ranges preferably from 20 °C to 100 °C and the extraction time typically ranges from 30 minutes to 18 hours at preferred pressures ranging from 1 to 6 bar. The extraction step may be followed by a further step of separating/removing the non-solubilized components when it is desirable using only the extract in the composition of the present invention. The removing/separating step is preferably performed by decantation, filtration or centrifugation. Alternatively, a suspension comprising both the extracted components and the non-extracted components can be used. Accordingly, the term "seaweed extract" typically refers to a liquid or solid containing or consisting of two or more, preferably five or more, more preferably ten or more, or even 50 or more compounds naturally occurring in seaweed, and, in the case of the liquid, optionally a solvent. Any amounts or contents of "seaweed extract" specified herein preferably refer to the amounts of the dry matter of the "seaweed extract", i.e. based on the "seaweed extract" excluding any solvent. Furthermore, the ratio of seaweed extract to phenylalanine and/or any salts or solvates thereof preferably relates to the ratio of the dry matter of the seaweed extract to the dry matter of the phenylalanine and/or any salts or solvates thereof. If salts, solvates or derivatives of the phenylalanine are used, this ratio (or any amounts of "phenylalanine") nevertheless preferably relates to the ratio of the dry matter of the seaweed extract to the dry matter of the phenylalanine (the amount of which can be calculated from the used amounts of the salts, solvates or derivatives of the phenylalanine).

As used herein the term "solvent" preferably refers to any substance, usually liquid, which is capable of dissolving one or several substances, thus creating a solution. The "solvent" preferably does not include water.

Unless explicitly specified otherwise, any amounts specified herein are preferably amounts by weight, preferably relative to the total weight of the combination.

Unless explicitly specified otherwise, any ratios specified herein are preferably ratios of weight/weight.

As used herein the term "liquid" preferably refers to a liquid at 25 °C and 1 atm.

Preferably, the process of preparation the seaweed extract is according to the procedure described in GB 664,989 A, in particular as set out in any of claims 1 to 5 of this document.

As used herein the term "active agents" are the agents that are present in the algal extract obtained by various processes of algal extraction. The algal extract may contain one or more than one active compound selected from, but not limited to polysaccharides, such as, especially, laminarin and fucans; free and conjugated sugars; polyphenols; mannitol; growth hormones; lipids; proteins; amino acids; vitamins; betaines; sterols; glucuronic acid and mineral salts.

Preferably the seaweed extract comprises alginic acid, fucoidins and mannitol.

As used herein the term "biostimulant" is any substance or microorganism applied to plants with the aim to enhance nutrition efficiency, abiotic stress tolerance and/or crop quality traits, regardless of its nutrient content.

As used herein the term "mitigating abiotic stress" is preferably one or more of: (i) increasing plant vigour, (ii) increasing root growth and development, (iii) increasing shoot growth and development, (iv) increasing plant growth rate, (v) increasing photosynthetic rate and capacity, or (vi) improving yield.

As used herein the term "crop productivity" is a measure of the amount of agricultural output produced for a given amount of inputs, preferably is a measure of the amount of agricultural output produced (such as crops etc.) for a given amount of inputs (such as seeds etc.), such as an index of multiple outputs divided by an index of multiple inputs (e.g., the value of all farm outputs divided by the value of all farm inputs).

Methods of identifying and measuring indicia of abiotic stress in plants are known to those of skill in the art and can include visual assessments of plant vitality, such as a reduction in the number or size of plants or parts thereof, a reduction in seed germination or emergence, or a reduction in seedling growth rates or vigour; gravimetric assessment of biomass yield, such as fresh or dry weights of shoots or roots; optical scanner-based assessments of plant parts, such as scanning of leaves or root systems and algorithmic determinations of leaf area or root lengths; physiological or biochemical assessments, such as cell membrane stability or relative leaf water content; and photosynthetic assessments of plant stress levels using reflectance or spectroscopy-based methods, such as determination of photosynthetic efficiency, linear electron flow, non-photochemical quenching, and relative chlorophyll levels.

As used herein the term "drench application" refers to an application of the combination and/or composition mixed in water on the soil near (e.g. within 5 meters, preferably 2 meters or even 1 meter of) the tree's and/or plant's root crown.

As used herein the term "fertilizer" is selected from organic and inorganic fertilizers such as those selected from but not limited to urea, NPK, nitrogen-based fertilizers, phosphate, calcium, potassium, magnesium, sulfur, copper, iron, manganese, molybdenum, zinc, nickel, cobalt, boron and their salts and derivatives.

As used herein the term "micronutrient" is selected from but not limited to iron, manganese, boron, molybdenum, zinc, chlorine, sodium, cobalt, silicon, nickel, chlorine, aluminium, vanadium, selenium and their salts and derivatives.

As used herein the term "combination" means an assemblage of agrochemicals for application either by simultaneous or contemporaneous application. The combination, as used herein, includes a mixture or mixtures of the seaweed and/or seaweed extract with another component, such as an additional biostimulant, preferably phenylalanine and/or any salts or solvates thereof. Said mixture may be obtained in a simultaneous addition or in a consecutive addition. In some embodiments, the composition may comprise at least one additional pesticide. In some embodiments, the composition may comprise an additional one or more biostimulants.

As used herein the term "mixture" refers, but is not limited, to a combination in any physical form, e.g., blend, solution, alloy, or the like.

As used herein the term "simultaneous" when used in connection with application of agrochemicals means that the agrochemicals are applied in an admixture, for example, a tank mix. For simultaneous application, the combination may be the admixture or separate containers each containing an agrochemical that are combined prior to application.

As used herein the term "contemporaneous" when used in connection with application of biostimulants means that an individual biostimulant is applied separately from another biostimulant or premixture at the same time or at times sufficiently close together such that at least one benefit from combining the biostimulants is achieved, for example, if two active components are applied contemporaneously, an activity that is additive or more than additive or synergistic relative to the activity of either active component alone at the same dose is achieved.

As used herein the term "tank mix" means one or more of the components of the composition of the present invention are mixed in a spray tank at the time of spray application or prior to spray application.

As used herein the term "amount" typically refers to a content of the component in the composition in weight per total weight of said composition.

As used herein the term "effective" when used in connection with an amount of the combination, mixture or composition preferably refers to an amount of the combination, mixture or composition that achieve a beneficial level of biostimulation when applied to the locus where the biostimulation is achieved.

As used herein the term "effective amount" typically refers to an amount of the active component that is commercially recommended for biostimulation. The commercially recommended amount for each active component, often specified as application rates of the commercial combination and/or composition, may be found on the label accompanying the commercial combination and/or composition. The commercially recommended application rates of the commercial combination and/or composition may vary depending on factors such as the plant species and the kind of biostimulation.

In the context of the present subject matter, the term "synergy" is as defined by Colby S R in an article 'Calculation of the synergistic and antagonistic responses of herbicidal combinations' published in the journal Weeds 1967, 15, p 20-22, incorporated herein in its entirety. Furthermore, not contradicting to the above definition, synergy might be calculated using the `Synergy Assessment for Plant Growth' by Independent Join Theory, Huang et al, 2021.

A "salt" or "agricultural acceptable salt" may be formed, e.g., by protonation of an atom carrying an electron lone pair which is susceptible to protonation, such as an amino group, with an inorganic or organic acid, or as a salt of a carboxylic acid group with a cation. Exemplary base addition salts comprise, for example: alkali metal salts such as sodium or potassium salts; alkaline earth metal salts such as calcium or magnesium salts; zinc salts; ammonium salts; aliphatic amine salts such as trimethylamine, triethylamine, dicyclohexylamine, ethanolamine, diethanolamine, triethanolamine, procaine salts, meglumine salts, ethylenediamine salts, or choline salts; aralkyl amine salts such as *N*,*N*-dibenzylethylenediamine salts, benzathine salts, benethamine salts; heterocyclic aromatic amine salts such as pyridine salts, picoline salts, quinoline salts or isoquinoline salts; quaternary ammonium salts such as tetramethylammonium salts, tetraethylammonium salts, benzyltrimethylammonium salts, benzyltriethylammonium salts, benzyltributylammonium salts, methyltrioctylammonium salts or tetrabutylammonium salts; and basic amino acid salts such as arginine salts, lysine salts, or histidine salts. Exemplary acid addition salts comprise, for example: mineral acid salts such as hydrochloride, hydrobromide, hydroiodide, sulfate salts, nitrate salts, phosphate salts (such as, e.g., phosphate, hydrogenphosphate, or dihydrogenphosphate salts), carbonate salts, hydrogencarbonate salts or perchlorate salts; organic acid salts such as acetate, propionate, butyrate, pentanoate, hexanoate, heptanoate, octanoate, cyclopentanepropionate, decanoate, undecanoate, oleate, stearate, lactate, maleate, oxalate, fumarate, tartrate, malate, citrate, succinate, glycolate, nicotinate, benzoate, salicylate, ascorbate, or pamoate (embonate) salts; sulfonate salts such as methanesulfonate (mesylate), ethanesulfonate (esylate), 2-hydroxyethanesulfonate (isethionate), benzenesulfonate (besylate), p-toluenesulfonate (tosylate), 2-naphthalenesulfonate (napsylate), 3-phenylsulfonate, or camphorsulfonate salts; and acidic amino acid salts such as aspartate or glutamate salts.

As used herein the term "solvate" preferable refers to hydrates, C₁₋₆-alkanolates or C₁₋₆-alkandiolates.

As used herein the term "stable" when used in connection with a composition means that the composition is physically stable and chemically stable.

As used herein, the term "chemically stable" preferably means that no significant decomposition of the active components was observed after at least 2 weeks of storage in a sealed package at a temperature of 54 °C in a sealed container. The term "significant" in this context preferably means that less than 5 wt% of the respective components are decomposed.

As used herein, the term "physically stable" means that no significant sedimentation was observed after at least 2 weeks of storage in a sealed package at a temperature of 54 °C. Stability may be assessed according to methods established by the Collaborative International Pesticides Analytical Council Ltd. (CIPAC). Stability can be assessed under normal storage conditions which is after two years storage at room temperature. Stability can also be assessed under accelerated storage conditions which is after 4 weeks storage at 50 °C or after 6 weeks at 45 °C or after 12 weeks at 35 °C or after 18 weeks at room temperature or at after 2 weeks at 0 °C.

As used herein, the term "BBCH" refers to Biologische Bundesanstalt, Bundessortenamt, und CHemische Industrie, is an abbreviation used in agriculture to refer to the BBCH scale, which is a system for phenological growth stages of plants. Stands for the three organizations that developed the scale. The BBCH scale provides a standardized way to describe the growth and development of various crops throughout their life cycle. It consists of a numerical code that represents specific growth stages or phenological events in plants. Each code corresponds to a particular stage of development, such as emergence, flowering, fruiting, or senescence. The BBCH scale is widely used in agricultural research, crop management, and phenological observations. It allows researchers, agronomists, and farmers to communicate and compare growth stages across different crops and regions, facilitating better timing for various agricultural practices like irrigation, fertilization, pest control, and harvest.

As used herein, the term "SPAD" refers to Soil Plant Analysis Development, is a handheld device that measures the relative chlorophyll concentration in leaves, which is an indicator of plant health and nutrient status. The SPAD meter works by shining a specific wavelength of light onto a leaf surface and measuring the light that is transmitted or reflected back. Chlorophyll absorbs light most efficiently in the red and blue regions of the spectrum, so the SPAD meter measures the amount of light absorbed by the leaf in these wavelengths. Based on the light absorption, the meter provides a numerical reading, typically referred to as the SPAD value. The SPAD value obtained from the meter can be used to estimate the chlorophyll content of the leaf and indirectly assess the plant's nutritional status. It is particularly useful for monitoring nitrogen levels in crops since chlorophyll production depends on an adequate supply of nitrogen. By measuring SPAD values in different parts of a field or at different growth stages, you can make informed decisions regarding fertilizer application, nitrogen management, and overall crop health.

As used herein, the term "DAP" refers to days after application.

As used herein the term "ha" refers to hectare.

The term "a" or "an" as used herein includes the singular and the plural, unless specifically stated otherwise. Therefore, the terms "a", "an", or "at least one" is used interchangeably in this application. For example, the term "a seaweed" is used interchangeably with the term "one or more seaweeds" and the term "a biostimulant" is used interchangeably with the term "one or more biostimulants".

Throughout the application, descriptions of various embodiments are described using the term "comprising"; This term is to be understood as also encompassing the terms "consisting essentially of" and/or "consisting of".

The term "about" herein specifically includes ±10 % from the indicated values in the range. In addition, the endpoints of all ranges directed to the same component or property herein are inclusive of the endpoints, are independently combinable, and include all intermediate points and ranges.

It is understood that where a parameter range is provided, all integers within that range, and tenths thereof, are also provided by the invention as if the integers and tenths thereof are expressly described herein. For example, "0.1% to 70%" includes 0.1%, 0.2%, 0.3%, 0.4%, 0.5% etc. up to 70%.

All publications, patents and patent applications mentioned in this specification are herein incorporated in their entirety by reference into the specification, to the same extent as if each individual publication, patent or patent application was specifically and individually indicated to be incorporated herein by reference.

The following examples illustrate the practice of the present subject matter in some of its embodiments but should not be construed as limiting the scope of the present subject matter. Other embodiments apparent to persons of ordinary skill in the art from consideration of the specification and examples herein that fall within the spirit and scope of the appended claims are part of this invention. The specification, including the examples, is intended to be exemplary only, without limiting the scope and spirit of the invention.

Aspects and embodiments of the present invention will now be described.

In one aspect, the present invention provides a combination of seaweed extract and phenylalanine and/or any salts or solvates thereof. In a preferred aspect, the present invention relates to a composition comprising seaweed extract and phenylalanine and/or any salts or solvates thereof. The combination may also comprise of one container containing the seaweed extract and the other container containing the phenylalanine and/or any salts or solvates thereof. Thus, in another preferred aspect, the present invention relates to a kit of parts comprising seaweed extract and phenylalanine and/or any salts or solvates thereof, wherein the seaweed extract and phenylalanine and/or any salts or solvates thereof are preferably comprised in separate containers or compartments. It is to be understood that the container or compartment containing the seaweed extract may contain additional components such as water, organic solvents, emulsifiers, etc. The seaweed extract and phenylalanine and/or any salts or solvates thereof are then typically to be applied by simultaneous or contemporaneous application. Thus, a kit of parts may further include instructions for simultaneous or contemporaneous applying the seaweed extract and phenylalanine and/or any salts or solvates thereof.

The present invention provides combinations of seaweed extract and phenylalanine and/or any salts or solvates thereof, preferably phenylalanine is considered to be L-phenylalanine, R-phenylalanine and any combination thereof. L-phenylalanine is more preferred. Other kinds of phenylalanine might share the same biostimulant effect in a combination with a seaweed extract, such as, but not limited to, oligo- or poly- or phenylalanine rich peptides. Also, it is considered to include any precursors to phenylalanine and/or derivatives of phenylalanine.

The combination of the present invention is preferably a synergistic combination.

The present invention also provides the combination wherein the seaweed is an active ingredient, preferably wherein the seaweed extract is the only active ingredient in the composition.

The present invention also provides the composition wherein the combination is stable.

The present invention also provides the combination wherein the combination is a plant biostimulant composition.

Preferably, the seaweed extract comprised within the composition of the present invention is a brown algae.

Preferably, the algae is a member of the class *Phaeophyceae.*

More preferably, the member of the class *Phaeophyceae* is the species *Ascophyllum nodosum.*

The present invention also provides the combination wherein the seaweed is an extract obtained from said algae.

The present invention also provides the combination wherein the extract is in the form of a Soluble Seaweed Extract Powder (SSEP) or Liquid Seaweed Extract (LSX).

Preferably, the combination comprises the seaweed extract and the phenylalanine and/or any salts or solvates thereof in the weight per weight ratio of about 10-1:1-10, which may also expressed as a range of about 10:1 to about 1:10, preferably in the range of about 8:1 to about 1:4, more preferably about 6:1 to about 1:2, even more preferably about 4:1 to about 1:1, still more preferably about 3:1 to about 1:1 (such as a range between any of 3.0:1.0, 2.9:1.0, 2.8:1.0, 2.7:1.0, 2.6:1.0, 0:1.0, 3.0:1.0, 2.5:1.0, 2.4:1.0, 2.3:1.0, 2.2:1.0 or 2.1:1.0 to any of 1.9:1.0, 1.8:1.0, 1.7:1.0, 1.6:1.0, 1.5:1.0, 1.4:1.0, 1.3:1.0, 1.2:1.0, 1.1:1.0 or 1.0:1.0), even more preferably about 2.5:1.0 to about 1.5:1.0, such as any one of 2.5:1.0, 2.4:1.0, 2.3:1.0, 2.2:1.0, 2.1:1.0, 2.0:1.0, 1.9:1.0, 1.8:1.0, 1.7:1.0, 1.6:1.0 or 1.5:1.0. More preferably, the combination wherein seaweed extract and phenylalanine and/or any salts or solvates thereof are in the ratio of about 2:1.

The present invention also provides the combination wherein the combination further comprising an additional active ingredient.

Preferably, the combination comprises the seaweed extract and the phenylalanine and/or any salts or solvates thereof in application rate of about 0.5 to about 10 L/ha, which may also expressed as an application rate of about 1 to about 7 L/ha, preferably in the range of about 1.5 to about 5 L/ha, more preferably about 2 to about 3 L/ha.

The present invention also provides the combination wherein the additional active ingredient is selected from a pesticide, a biostimulant, and a mixture thereof.

The present invention also provides the combination wherein said pesticide is selected from a herbicide, a fungicide, an insecticide, a nematicide, acaricide, and a mixture thereof.

The present invention also provides the combination wherein said biostimulant is selected from an amino-acid (i.e. typically an amino-acid other than the phenylalanine and/or any salts or solvates thereof contained as a mandatory component of the combination), an amino-acid betaine, a microorganism, an inorganic fertilizer, such as nitrogen fertilizer, phosphorus fertilizer, an organic fertilizer, such as amino acid and fulvic and humic acid, and a mixture thereof.

In another aspect, the present invention provides a method of crop productivity management in a plant comprising applying to the plant, a seed of the plant or to a growth medium of the plant an effective amount of the combination as described above.

In yet another aspect, the present invention provides a method of preventing or mitigating the effects of abiotic stress in a plant comprising applying to the plant, a seed of the plant or to a growth medium of the plant an effective amount of the combination as described herein.

The mitigating abiotic stress preferably comprises one or more of:
(i) increasing plant vigour,
(ii) increasing root growth and development,
(iii) increasing shoot growth and development,
(iv) increasing plant growth rate,
(v) increasing photosynthetic rate and capacity, or
(vi) improving yield.

The method preferably comprises applying to the seed of the plant an effective amount of the combination as described above.

The method preferably comprises drench application on the plant an effective amount of the combination as described above.

In another aspect, the present invention provides a use of a combination as described above to prevent or mitigate the effects of abiotic stress or to manage crop productivity in a plant.

The present invention also provides a use of a composition as described above to prevent or mitigate the effects of abiotic stress.

The present invention also provides said use of a composition as described above to manage crop productivity in a plant.

The present invention additionally relates to the use of a seaweed extract or phenylalanine and/or any salts or solvates thereof for the preparation of a combination of the present invention. The use preferably further comprises preventing or mitigating the effects of abiotic stress, or for managing crop productivity in a plant by use of this combination of the present invention.

The present invention also relates to the use of a seaweed extract for preventing or mitigating the effects of abiotic stress, or for managing crop productivity in a plant, in combination with phenylalanine and/or any salts or solvates thereof. It is to be understood that the preferred features disclose for the combination of the present invention, in particular as regards preferred forms of seaweed extract, preferred forms of L-phenylalanine and the ratio between seaweed extract and phenylalanine and/or any salts or solvates thereof, also apply as preferred features to this use.

The present invention additionally relates to the use of phenylalanine and/or any salts or solvates thereof for preventing or mitigating the effects of abiotic stress, or for managing crop productivity in a plant, in combination with a seaweed extract. It is to be understood that the preferred features disclose for the combination of the present invention, in particular as regards preferred forms of seaweed extract, preferred forms of phenylalanine and/or any salts or solvates thereof and the ratio between seaweed extract and phenylalanine and/or any salts or solvates thereof, also apply as preferred features to this use.

Each aspect and/or embodiment disclosed herein is contemplated as being applicable to each of the other disclosed embodiments. Thus, all combinations of the various elements described herein are within the scope of the invention. In addition, the elements recited in composition embodiments can be used in the combination, mixture, method, use, package and process embodiments described herein and vice versa.

This invention will be better understood by reference to the Examples which follow, but those skilled in the art will readily appreciate that the specific experiments detailed are only illustrative of the invention as described more fully in the claims which follow thereafter.

The invention is illustrated by the following examples without limiting it thereby.

### Examples

The following examples are meant to illustrate the present invention. The examples are presented to exemplify the invention and are not to be considered as limiting the scope of the present invention. The (powdered) seaweed extract was obtained from Acadian^{™} Seaplants Limited - Acadian^{™} soluble seaweed extract powder. The other materials were obtained as follows:
L-phenylalanine was purchased from Zhonglan Industry Co Ltd.

These experiments were performed under the following conditions:

### 1. Test item(s)

| **Product *(i.e. tradename and product code)*** | **Active Ingredient** |
|---|---|
| APH-1001 (Acadian^{™} Seaplants Limited) | *Ascophylum nodosum* extract |
| L-phenylalanine powder | L-phenylalanine |

### 2. Test System

| **Crop** | **Cultivar** | **Source** |
|---|---|---|
| Corn | NK7837-3220-0-E-21 | Agromart |
| Tomato | Manitoba | Halifax Seed |
| Soybean | S007-Y4 | Agromart |

### 3. Experimental Design:

### Reduced irrigation soybean

**Key dates (2021):**
November 10 - Planted
November 17 - Transfer to 4' pots with Pro-mix plus (outlined under the header "substrate") 50 mL 20-8-20 fertilizer (outlined under the header "fertilizer") @ 1 g/L and drench treat except 100 mL fertilizer for unstressed controls (7DAS (i.e. days after seeding)
November 20 - 100 mL reverse osmosis water to unstressed control and 25 mL reverse osmosis water to other (10DAS)
November 22 - 100 mL reverse osmosis water to unstressed control and 25 mL reverse osmosis water to other (12DAS)
November 24 - 50 mL 20-8-20 fertilizer @ 1 g/L except 100 mL to unstressed control (14DAS) November 26 - 100 mL reverse osmosis water to unstressed control and 25 mL reverse osmosis water to other (16DAS)
November 28 - 100 mL reverse osmosis water to unstressed control and 25 mL reverse osmosis water to other (18DAS)
November 29 - 50 mL reverse osmosis water (19DS)
December 1- Measure photosynthetic parameters (PhotosynQ) (21DAS)

**Location:**
Craigie Research and Development Centre, Cornwallis Park, Nova Scotia, Canada

**Growth Conditions:**
Heated greenhouse with supplemental lighting. Temperature, humidity, and light were considered and controls were adjusted through an automated feedback network to avoid rapid fluctuations in vapor pressure deficit (VPD) and to keep VPD at approximately 1-1.2 kPa.

Approximate temperatures 26 °C (day) and 19.5 °C (night).

Approximate daytime PAR (i.e. photosynthetically active radiation) 159-520.

Approximate day length 9 hours, supplemental light 8 hours.

**Method:**
Replication: N=90, n=18
Randomization: Completely randomized
Experimental Unit: Whole plant

**Growth Stage:**
V1-V3 (American) or 11-13 (BCCH)

**Substrate:**
Pro-Mix BX peat-based media (Premier Tech Horticulture, Canada)

**Fertilizer:**
Plant-Prod 20-8-20 All Purpose High Nitrate Water Soluble Fertilizer (Master Plant-Prod Inc.)

**Actives:**
APH-1001 0.5 g/L, broadcast foliar application so approximation of about 0.35 mg/plant L-phenylalanine 0.25 g/L, broadcast foliar application so approximation of about 0.175 mg/plant
*conversion to a.i. (i.e. active ingredient) per cultivated area would be meaningless, as there are too many assumptions about planting density and total volume applied.

### Salinity tomato

**Key dates (2022):**
January 2 - Planted
January 16 - Transfer to 4' pots with Pro-mix 50 mL of treatment with 20-8-20 @ 1 g/L (100 mL to unstressed control) (14DAS)
January 20 - 100 mL of 20-8-20 @ 1.0 g/L for unstressed control, 100 mL of 20-8-20 @ 0.5 g/L for others (18DAS)
January 23 - 50 mL of NaCl @ 250 mM except reverse osmosis water to unstressed control (21DAS)
January 24 - 100 mL 20-8-20 @ 0.5 g/L to unstressed control (22DAS)
January 26 - 100 mL reverse osmosis water to all (24DAS)
January 28 - 100 mL reverse osmosis water to all (26DAS)
January 30 - Measure photosynthetic parameters (PhotosynQ) (28DAS)

**Location:**

Craigie Research and Development Centre, Cornwallis Park, Nova Scotia, Canada

**Growth Conditions:**
Heated greenhouse with supplemental lighting. Temperature, humidity, and light were considered and controls were adjusted through an automated feedback network to avoid rapid fluctuations in vapor pressure deficit (VPD) and to keep VPD at approximately 1-1.2 kPa.

Approximate temperatures 26 °C (day) and 19.5 °C (night).

Approximate daytime PAR 322-515.

Approximate day length 9.5 hours, supplemental light 9 hours.

**Method:**
Replication: N=75, n=15
Randomization: Completely randomized
Experimental Unit: Whole plant

**Growth Stage:**
1-4 true leaves (early vegetative)

**Substrate:**

Pro-Mix BX peat-based media (Premier Tech Horticulture, Canada)

**Fertilizer:**

Plant-Prod 20-8-20 All Purpose High Nitrate Water Soluble Fertilizer (Master Plant-Prod Inc.)

**Actives:**
APH-1001 0.5 g/L, broadcast foliar application so approximation of about 0.35 mg/plant L-phenylalanine 0.25 g/L, broadcast foliar application so approximation of about 0.175 mg/plant.
*conversion to a.i. per cultivated area would be meaningless, as there are too many assumptions about planting density and total volume applied.

### Salinity corn

**Key dates (2021):**
November 18 - Planted
November 23 - Transfer to 4' pots with Pro-mix plus 50 mL 20-8-20 fertilizer @ 1 g/L and drench treat except 100mL fertilizer for unstressed controls (5DAS)
November 26 - 100 mL 20-8-20 fertilizer @ 1 g/L (8DAS)
November 30 - 50 mL NaCl @ 600 mM except 50 mL reverse osmosis water to unstressed controls (12DAS)
December 5 - 100 mL reverse osmosis water (17DAS)
December 7 - measure leaf surface area (19DAS)

**Location:**
Craigie Research and Development Centre, Cornwallis Park, Nova Scotia, Canada

**Growth Conditions:**
Heated greenhouse with supplemental lighting. Temperature, humidity, and light were considered and controls were adjusted through an automated feedback network to avoid rapid fluctuations in vapor pressure deficit (VPD) and to keep VPD at approximately 1-1.2 kPa.

Approximate temperatures 26 °C (day) and 19.5 °C (night).

Approximate daytime PAR 197-627.

Approximate day length 9 hours, supplemental light 8 hours.

**Method:**
Replication: N=90, n=18
Randomization: Completely randomized
Experimental Unit: Whole plant

**Growth Stage:**
V1-V3 or 4 (American) or 11-13 or 14 (BCCH)

**Substrate:**
Pro-Mix BX peat-based media (Premier Tech Horticulture, Canada)

**Fertilizer:**
Plant-Prod 20-8-20 All Purpose High Nitrate Water Soluble Fertilizer (Master Plant-Prod Inc.)

**Actives:**
APH-1001 0.5 g/L, broadcast foliar application so approximation of about 0.35 mg/plant L-phenylalanine 12.5 mL/L, broadcast foliar application so approximation of about 0.25 mg/plant.
*conversion to a.i. per cultivated area would be meaningless, as there are too many assumptions about planting density and total volume applied.

### Salinity corn

**Key dates (2022):**
November 16 - Planted
November 21 - Transplant, 50 mL of treatment with 20-8-20 @ 1 g/L (100 mL fert to unstressed control). Place in GH1 (5DAS)
November 24 - 100 mL of 20-8-20 @ 1.0 g/L to all (8DAS)
November 28 - 50 mL of NaCl solution at 600 mM, 50 mL reverse osmosis water to unstressed control (12DAS)
December 1 - Optional 100 mL reverse osmosis water to all (15DAS)
December 3 - 100 mL reverse osmosis water to all (17DAS)
December 5 - Measure leaf temperature differential (19DAS)

**Location:**

Craigie Research and Development Centre, Cornwallis Park, Nova Scotia, Canada

**Growth Conditions:**
Heated greenhouse with supplemental lighting. Temperature, humidity, and light were considered and controls were adjusted through an automated feedback network to avoid rapid fluctuations in vapor pressure deficit (VPD) and to keep VPD at approximately 1-1.2 kPa.

Approximate temperatures 26 °C (day) and 19.5 °C (night).

Approximate daytime PAR 159-520.

Approximate day length 9 hours, supplemental light 8 hours.

**Method:**
Replication: N=75, n=15
Randomization: Completely randomized
Experimental Unit: Whole plant

**Growth Stage:**
V1-V3 or 4 (American) or 11-13 or 14 (BCCH)

Substrate:
Pro-Mix BX peat-based media (Premier Tech Horticulture, Canada)

**Fertilizer:**

Plant-Prod 20-8-20 All Purpose High Nitrate Water Soluble Fertilizer (Master Plant-Prod Inc.)

**Actives:**
APH-1001 0.5 g/L, broadcast foliar application so approximation of about 0.35 mg/plant L-phenylalanine 0.25 g/L, broadcast foliar application so approximation of about 0.175 mg/plant.
*conversion to a.i. per cultivated area would be meaningless, as there are too many assumptions about planting density and total volume applied.

**4. Assessment:**
The synergy assessment of APH 1001 0.5 g/L in combination with L-phenylalanine 0.25 g/L or L-phenylalanine 12.5 mL/L: The observed response is the response of treatment group APH_1001_0.5+Ph 0.25g/L or APH_1001_0.5+Ph 12.5 mL/L. The predicted response is the predicted result according to Independent Joint Action theory. The synergy factor is the ratio of the observed response and the predicted response.

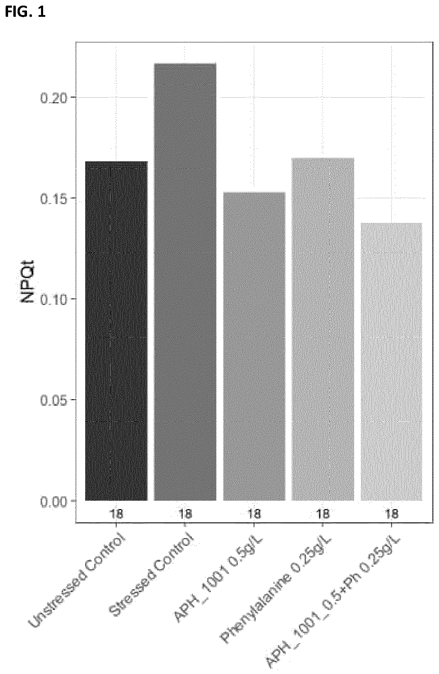

**Results:**
For NPQt (non-photochemical quenching) assessment of the APH 1001 0.5 g/L with L-phenylalanine 0.25 g/L combination - reduced irrigation on soybean, figure 1 demonstrates that a drench application with the combination on soybean reduced the non-photochemical quenching, in a synergistic effective amount. An increase in NPQt could be unfavorable for the plant if it is taking energy away from actual photosynthesis.

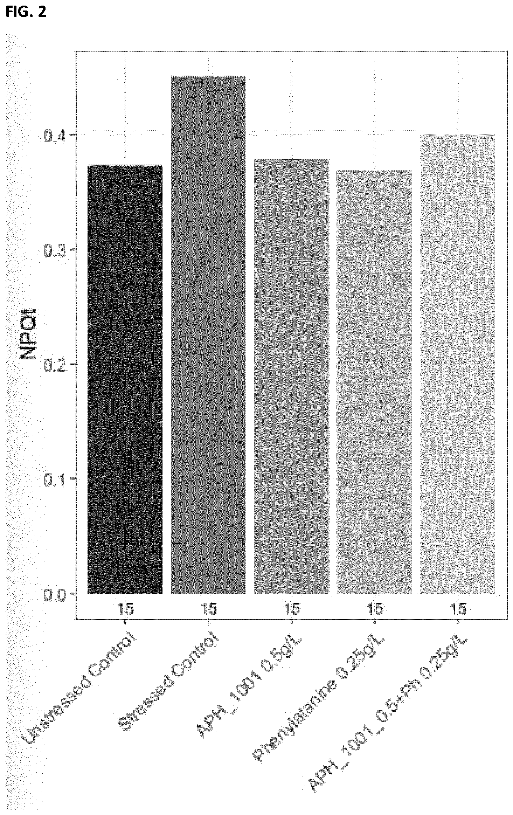

For NPQt (non-photochemical quenching) assessment of the APH 1001 0.5 g/L with L-phenylalanine 0.25 g/L combination - salinity inducement on tomato, figure 2 demonstrates that a drench application with the combination on tomato reduced the non-photochemical quenching, in a synergistic effective amount. An increase in NPQt could be unfavorable for the plant if it is taking energy away from actual photosynthesis.

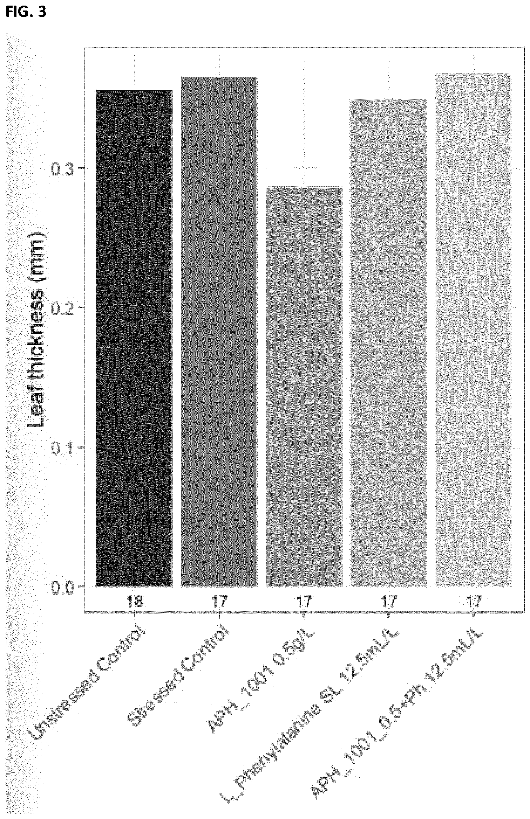

For leaf thickness assessment of the APH 1001 0.5 g/L with L-phenylalanine 12.5 mL/L combination - salinity inducement on corn, figure 3 demonstrates that a drench application with the combination on corn reduced the thickness of the leaf (in mm), in a synergistic effective amount. Leaf area is being maintained but the water content in the leaf is bigger (fresh shoot weight as an indication). The shoot fresh weight improving with all treatments but best for the tank mix, so the stressed control has thicker, smaller leaves (to have a lower shoot fresh weight) signifying stunting, while the tank mix has thicker leaves but higher shoot fresh weight which is to signify maintained leaf area with better water status.

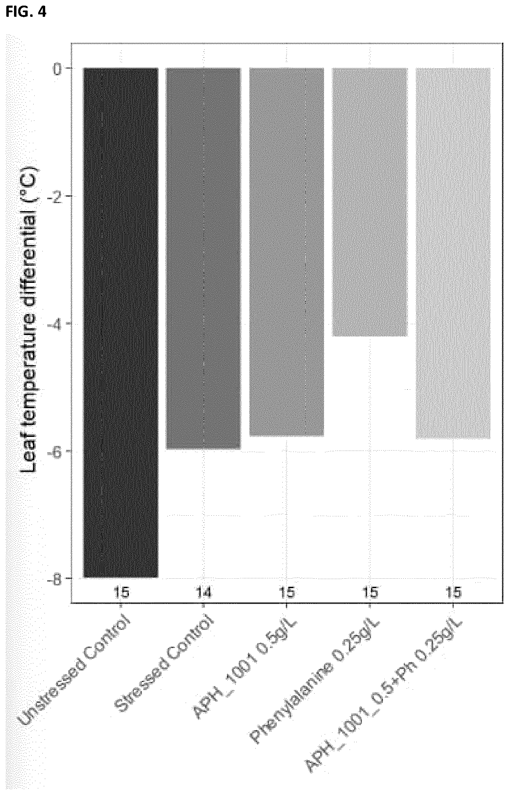

For leaf temperature differential assessment of the APH 1001 0.5 g/L with L-phenylalanine 0.25 g/L combination - salinity inducement on corn, figure 4 demonstrates that a drench application with the combination on corn reduced the temperature of the leaf (in °C), in a synergistic effective amount. All treatments had thicker leaves and improved shoot fresh weight relative to the stressed control, so the stomata are conserving water under stress. Therefore, although the leaf is warmer, but is thicker, which means increased ability to retain water and the water content in the leaf is greater.

## Claims

1. A combination of seaweed extract and phenylalanine and/or any salts or solvates thereof.

2. The combination according to claim 1 wherein said mixture is synergistic.

3. The combination according to any of claims 1 or 2, wherein seaweed extract and phenylalanine and/or any salts or solvates thereof are in the ratio of about 10-1:1-10, preferably wherein seaweed extract and phenylalanine and/or any salts or solvates thereof are in the ratio of 2:1.

4. The combination according to any one of claims 1-3, wherein the seaweed is a brown algae, wherein said algae is preferably a member of the class *Phaeophyceae,* wherein said member of the class *Phaeophyceae* is preferably the species *Ascophyllum nodosum.*

5. The combination according to any one of claims 1-4, further comprising an additional active ingredient, wherein said additional active ingredient is preferably selected from a pesticide, a biostimulant, and a mixture thereof.

6. The combination according to claim 5, wherein said pesticide is selected from a herbicide, a fungicide, an insecticide, a nematicide, acaricide, and a mixture thereof, and/or wherein said biostimulant is selected from an amino-acid, an amino-acid betaine, a microorganism, an inorganic fertilizer, such as nitrogen fertilizer, phosphorus fertilizer, an organic fertilizer, such as amino acid and fulvic and humic acid, and a mixture thereof.

7. A method of crop productivity management in a plant comprising applying to the plant, a seed of the plant or to a growth medium of the plant an effective amount of the combination according to any of claims 1 to 6.

8. A method of preventing or mitigating the effects of abiotic stress in a plant comprising applying to the plant, a seed of the plant or to a growth medium of the plant an effective amount of the combination according to any of claims 1 to 6.

9. The method according to claim 8, wherein mitigating abiotic stress comprising one or more of:
(i) increasing plant vigour,
(ii) increasing root growth and development,
(iii) increasing shoot growth and development,
(iv) increasing plant growth rate,
(v) increasing photosynthetic rate and capacity, or
(vi) improving yield.

10. The method according to any one of claims 7-9, comprising applying to the seed of the plant an effective amount of the combination according to any of claims 1 to 6.

11. The method according to claim 8 or 9, comprising applying drench application on a plant an effective amount of the combination according to any of claims 1 to 6.

12. Use of a combination according to any one of claims to 1-6 to prevent or mitigate the effects of abiotic stress, or to manage crop productivity in a plant.

13. Use of a seaweed extract or phenylalanine and/or any salts or solvates thereof for the preparation of a combination according to any one of claims to 1-6.

14. Use of a seaweed extract for preventing or mitigating the effects of abiotic stress, or for managing crop productivity in a plant, wherein the seaweed extract is to be used in combination with phenylalanine and/or any salts or solvates thereof.

15. Use of phenylalanine and/or any salts or solvates thereof for preventing or mitigating the effects of abiotic stress, or for managing crop productivity in a plant, wherein the phenylalanine and/or any salts or solvates thereof is to be used in combination with a seaweed extract.
